# EUROPEAN PATENT APPLICATION

(11) **EP 4 369 826 A1**
(43) Date of publication of application: **15.05.2024**
(21) Application number: 22855037.2
(22) Date of filing: 25.05.2022
(51) Int. Cl.: H04W 72/04

(54) **SIGNAL TRANSMISSION METHOD AND COMMUNICATION APPARATUS**

(30) Priority: 13.08.2021 CN 202110930955
(71) Applicant: Huawei Technologies Co., Ltd., Shenzhen, Guangdong 518129 (CN)
(72) Inventor: NING, Xiaoke, Shenzhen, Guangdong 518129 (CN); XIE, Honggang, Shenzhen, Guangdong 518129 (CN); HU, Mingming, Shenzhen, Guangdong 518129 (CN); ZHANG, Zhenhua, Shenzhen, Guangdong 518129 (CN)
(74) Representative: Gill Jennings & Every LLP
(86) International application number: PCT/CN2022/095071
(87) International publication number: WO 2023/016051

(57) **Abstract**

This application provides a signal transmission method and a communication apparatus, so that SSBs with different periodicities can be flexibly sent based on an actual network parameter. This helps improve an access success rate, a handover success rate, and service stability of a terminal device, and reduce a proportion of time domain resources occupied by the SSB. The method includes: A first network device determines, based on a current network parameter, a sending quantity or sending duration of a synchronization signal and physical broadcast channel block SSB with a first periodicity; and the first network device sends, on a basis of sending an SSB with a second periodicity, the SSB with the first periodicity based on the sending quantity or the sending duration, where the first periodicity is less than or equal to 20 ms, and the second periodicity is greater than or equal to 40 ms.

## Description

This application claims priority to Chinese Patent Application No. 202110930955.7, filed with the China National Intellectual Property Administration on August 13, 2021 and entitled "SIGNAL TRANSMISSION METHOD AND COMMUNICATION APPARATUS", which is incorporated herein by reference in its entirety.

### TECHNICAL FIELD

This application relates to the communication field, and specifically, to a signal transmission method and a communication apparatus in the communication field.

### BACKGROUND

A synchronization signal and physical broadcast channel block (synchronization signal and PBCH block, SSB, where PBCH is short for physical broadcast channel (physical broadcast channel)) mainly includes a primary synchronization signal (primary synchronization signal, PSS), a secondary synchronization signal (secondary synchronization signal, SSS), and a PBCH. The SSB may be sent by a network device through a broadcast channel. Before accessing a network, a terminal device needs to search for the PSS and the SSS to complete time synchronization, and receive the PBCH channel to complete obtaining of cell information, so as to prepare for the access.

Currently, the SSB is sent in a configured fixed periodicity. For example, the fixed periodicity may be generally configured as 5 ms, 10 ms, 20 ms, 40 ms, 80 ms, 160 ms, or the like. A periodicity longer than 40 ms (including 40 ms) is generally referred to as a long periodicity, and a periodicity shorter than 20 ms (including 20 ms) is generally referred to as a short periodicity. In actual live network application, if a fixed long periodicity is configured for an SSB, problems such as difficulty in network searching, a call drop, and an access failure occur on a terminal device, and access, handover, and service stability of the terminal device are affected. If a fixed short periodicity is configured for an SSB, transmission of the SSB occupies a large time domain resource, and resource waste and power waste are caused.

### SUMMARY

This application provides a signal transmission method and a communication apparatus, so that SSBs with different periodicities can be flexibly sent based on an actual network parameter. This helps improve an access success rate, a handover success rate, and service stability of a terminal device, and reduce a proportion of time domain resources occupied by the SSB.

According to a first aspect, a signal transmission method is provided. The method includes: A first network device determines, based on a current network parameter, a sending quantity or sending duration of a synchronization signal and physical broadcast channel block SSB with a first periodicity; and the first network device sends, on a basis of sending an SSB with a second periodicity, the SSB with the first periodicity based on the sending quantity or the sending duration, where the first periodicity is less than or equal to 20 ms, and the second periodicity is greater than or equal to 40 ms.

According to the signal transmission method in this embodiment of this application, on a basis of currently sending an SSB in a fixed long periodicity (namely, the second periodicity), a cluster of SSBs with a short periodicity (namely, the first periodicity) are additionally and dynamically sent. In this way, the SSB with the long periodicity is fixedly configured, so that a call drop problem caused by affecting terminal measurement does not exist. This helps improve service stability of a terminal device. In addition, an SSB with the short periodicity is dynamically and additionally sent based on an actual network parameter, so that the SSB in this application is sent more flexibly. Compared with a solution in which the SSB with the long periodicity is sent fixedly for a long term, this helps improve an access success rate and a handover success rate of the terminal device. Compared with a solution in which the SSB with the short periodicity is sent fixedly for a long term, this reduces a proportion of time domain resources occupied by the SSB, and can obtain energy saving benefits in combination with symbol power saving, so that resource utilization is improved.

The sending in this embodiment of this application generally refers to broadcasting. In other words, the first network device sends an SSB through a broadcast channel.

It should be understood that, in an SA networking mode, the first network device is a network device in SA, and in an NSA networking mode, the first network device is a primary network device (for example, a primary base station) in NSA.

The second periodicity in this embodiment of this application is predefined, for example, agreed upon in a protocol, where the first network device fixedly sends an SSB in the second periodicity. The second periodicity may be, for example, 160 ms. The first periodicity in this embodiment of this application may be predefined, for example, agreed upon in a protocol, or may be determined by the first network device based on the current network parameter. For example, the first periodicity may be 20 ms. This is not limited in this embodiment of this application.

The sending quantity or the sending duration may be predefined, for example, agreed upon in a protocol, or may be determined by the first network device based on the current network parameter. This is not limited in this embodiment of this application.

With reference to the first aspect, in some implementations of the first aspect, that a first network device determines, based on a current network parameter, a sending quantity or sending duration of a synchronization signal and physical broadcast channel block SSB with a first periodicity includes: The first network device obtains at least one of load of a current network, a quantity of online activated users, or a quantity of cell edge users, where the quantity of cell edge users indicates a quantity of users corresponding to a device whose signal strength is greater than or equal to a preset threshold value in the current network; and when at least one of the load, the quantity of online activated users, or the quantity of cell edge users is greater than or equal to a preset threshold, the first network device determines the sending quantity or the sending duration of the SSB with the first periodicity.

For example, the load of the current network may correspond to a first preset threshold, the quantity of online activated users may correspond to a second preset threshold, and the quantity of cell edge users may correspond to a third preset threshold. The three preset thresholds are predefined, for example, agreed upon in a protocol. In addition, the three preset thresholds may be the same or may be different. This is not limited in this embodiment of this application.

In this embodiment of this application, it may be understood that the current network parameter includes at least one of the load of the current network, the quantity of online activated users, or the quantity of cell edge users, and a condition for sending the SSB with the first periodicity includes at least one of the following:
1. The load of the current network is greater than or equal to the first preset threshold.
2. The quantity of online activated users is greater than or equal to the second preset threshold.
3. The quantity of cell edge users is greater than or equal to the third preset threshold.

When at least one of the foregoing conditions is met, the first network device may determine that one or more additional clusters of SSBs with the short periodicity need to be added, to ensure effective access and handover of the terminal device.

With reference to the first aspect, in some implementations of the first aspect, the method further includes: The first network device determines a sending periodicity of an SSB cluster, where the SSB cluster includes a plurality of consecutive SSBs with the first periodicity; and that the first network device sends, on a basis of sending an SSB with a second periodicity, the SSB with the first periodicity based on the sending quantity or the sending duration includes: The first network device sends, on the basis of sending the SSB with the second periodicity, the SSB with the first periodicity based on the sending periodicity of the SSB cluster and the sending quantity or the sending duration.

It should be understood that a plurality of consecutively sent SSBs with the first periodicity may form one SSB cluster. In this embodiment of this application, the first network device may periodically send a plurality of SSB clusters based on an actual network status. Therefore, the first network device needs to determine the sending periodicity of the SSB cluster, where the sending periodicity of the SSB cluster may also be referred to as a "cluster sending periodicity" or another name. The sending periodicity of the SSB cluster may be predefined, for example, agreed upon in a protocol, or may be determined by the first network device based on the actual network status. This is not limited herein.

With reference to the first aspect, in some implementations of the first aspect, after that the first network device sends, on a basis of sending an SSB with a second periodicity, the SSB with the first periodicity based on the sending quantity or the sending duration, the method further includes: The first network device stops, based on the current network parameter, sending the SSB with the first periodicity.

When the first network device sends the SSB cluster based on the sending periodicity of the SSB cluster, the SSBs with the first periodicity are consecutively sent. After sending the SSB with the first periodicity, the first network device may continue to periodically obtain the current network parameter, and perform determining based on the current network parameter. When the current network parameter is less than the preset threshold, the first network device stops sending the SSB with the first periodicity, to reduce a proportion of time domain symbols occupied by the SSB and save resources.

With reference to the first aspect, in some implementations of the first aspect, that the first network device stops, based on the current network parameter, sending the SSB with the first periodicity includes: The first network device periodically obtains at least one of the load of the current network, the quantity of online activated users, or the quantity of cell edge users, where the quantity of cell edge users indicates the quantity of users corresponding to the device whose signal strength is greater than or equal to the preset threshold value in the current network; and when at least one of the load, the quantity of online activated users, or the quantity of cell edge users is less than the preset threshold, the first network device stops sending the SSB with the first periodicity.

It should be understood that the preset threshold herein may be the same as the preset threshold in the condition for sending the SSB with the first periodicity.

With reference to the first aspect, in some implementations of the first aspect, the method further includes: The first network device receives indication information from a second network device, where the indication information indicates that a terminal device requests access, the first network device is a primary network device, and the second network device is a secondary network device; and the first network device sends, on the basis of sending the SSB with the second periodicity, an SSB with a third periodicity based on the indication information, where the third periodicity is less than or equal to 20 ms.

In NSA networking, the terminal device may access the first network device via the second network device. After the terminal device successfully accesses the second network device, the second network device may notify the first network device of the access of the terminal device. The first network device may dynamically and quickly add one cluster of SSBs with the short periodicity and send the cluster of SSBs, namely, the SSB with the third periodicity in this embodiment of this application. This is for resolving a problem that when the terminal device performs access in the NSA networking, the terminal device fails to perform access due to a synchronization failure between the terminal device and the first network device, and ensuring normal access and service experience of the terminal device when the long periodicity is configured in the NSA networking.

The third periodicity is predefined, for example, agreed upon in a protocol. For example, the third periodicity may be 20 ms, or may be 10 ms. The third periodicity may be the same as or different from the first periodicity. This is not limited in this embodiment of this application.

With reference to the first aspect, in some implementations of the first aspect, after that the first network device sends, on the basis of sending the SSB with the second periodicity, an SSB with a third periodicity based on the indication information, the method further includes: After the terminal device successfully accesses the first network device, the first network device stops sending the SSB with the third periodicity.

The successful access of the terminal device may be understood as that the terminal device completes RRC connection reconfiguration on a first network device side. In this embodiment of this application, after the terminal device successfully accesses the first network device, the sending of the SSB with the third periodicity is stopped. This ensures the successful access of the terminal device, reduces a proportion of time domain symbols occupied by the SSB, and saves resources.

According to a second aspect, a communication apparatus is provided. The apparatus is configured to perform the method in any possible implementation of the first aspect. Specifically, the apparatus includes a module configured to perform the method in any possible implementation of the first aspect.

According to a third aspect, this application provides another communication apparatus, including a processor. The processor is coupled to a storage, and may be configured to execute instructions in the storage, to implement the method in any possible implementation of the first aspect. Optionally, the communication apparatus further includes the storage. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip disposed in the network device. When the communication apparatus is the chip disposed in the network device, the communication interface may be an input/output interface.

According to a fourth aspect, a processor is provided. The processor includes an input circuit, an output circuit, and a processing circuit. The processing circuit is configured to: receive a signal via the input circuit, and transmit a signal via the output circuit, so that the processor performs the method in any possible implementation of the first aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is separately used as the input circuit and the output circuit at different moments. Specific implementations of the processor and the various circuits are not limited in an embodiment of this application.

According to a fifth aspect, a processing apparatus is provided. The processing apparatus includes a processor and a storage. The processor is configured to: read instructions stored in the storage, receive a signal via a receiver, and transmit a signal via a transmitter, to perform the method in any possible implementation of the first aspect.

Optionally, there are one or more processors, and there are one or more storages.

Optionally, the storage may be integrated with the processor, or the storage and the processor are separately disposed.

In a specific implementation process, the storage may be a non-transitory (non-transitory) memory, such as a read-only memory (read-only memory, ROM). The storage and the processor may be integrated into a same chip, or may be separately disposed in different chips. A type of the storage and a manner in which the storage and the processor are disposed are not limited in an embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the fifth aspect may be one chip. The processor may be implemented by using hardware or software. When the processor is implemented by using the hardware, the processor may be a logic circuit, an integrated circuit, or the like. When the processor is implemented by using the software, the processor may be a general-purpose processor, and may be implemented by reading software code stored in the storage. The storage may be integrated into the processor, or may be located outside the processor and exist independently.

According to a sixth aspect, a computer program product is provided. The computer program product includes a computer program (which may also be referred to as code or instructions). When the computer program is run, a computer is enabled to perform the method in any possible implementation of the first aspect.

According to a seventh aspect, a computer-readable storage medium is provided. The computer-readable storage medium stores a computer program (which may also be referred to as code or instructions). When the computer program is run on a computer, the computer is enabled to perform the method in any possible implementation of the first aspect.

### BRIEF DESCRIPTION OF DRAWINGS

FIG. 1 is a schematic diagram of a communication system according to an embodiment of this application;
FIG. 2 is a schematic diagram of a networking scenario to which an embodiment of this application is applicable;
FIG. 3 is a schematic diagram of another networking scenario to which an embodiment of this application is applicable;
FIG. 4 is a schematic diagram of still another networking scenario to which an embodiment of this application is applicable;
FIG. 5 is a schematic diagram of still another networking scenario to which an embodiment of this application is applicable;
FIG. 6 is a schematic diagram of still another networking scenario to which an embodiment of this application is applicable;
FIG. 7 is a schematic diagram of still another networking scenario to which an embodiment of this application is applicable;
FIG. 8 is a schematic diagram of still another networking scenario to which an embodiment of this application is applicable;
FIG. 9 is a schematic diagram of still another networking scenario to which an embodiment of this application is applicable;
FIG. 10 is a schematic diagram of still another networking scenario to which an embodiment of this application is applicable;
FIG. 11 is a schematic flowchart of a signal transmission method according to an embodiment of this application;
FIG. 12 is a schematic diagram of signal transmission according to an embodiment of this application;
FIG. 13 is a schematic flowchart of another signal transmission method according to an embodiment of this application;
FIG. 14 is a schematic flowchart of still another signal transmission method according to an embodiment of this application;
FIG. 15 is another schematic diagram of signal transmission according to an embodiment of this application;
FIG. 16 is a schematic block diagram of a communication apparatus according to an embodiment of this application; and
FIG. 17 is a schematic block diagram of another communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, or new radio (new radio, NR) system.

It should be further understood that the technical solutions in embodiments of this application may be further applied to various communication systems that are based on a non-orthogonal multiple access technology, for example, a sparse code multiple access (sparse code multiple access, SCMA) system, and SCMA may certainly also be referred to as another name in the communication field. Further, the technical solutions in embodiments of this application may be applied to a multi-carrier transmission system that uses the non-orthogonal multiple access technology, for example, an orthogonal frequency division multiplexing (orthogonal frequency division multiplexing, OFDM) system, a filter bank multi-carrier (filter bank multi-carrier, FBMC) system, a generalized frequency division multiplexing (generalized frequency division multiplexing, GFDM) system, or a filtered orthogonal frequency division multiplexing (filtered-OFDM, F-OFDM) system that uses the non-orthogonal multiple access technology.

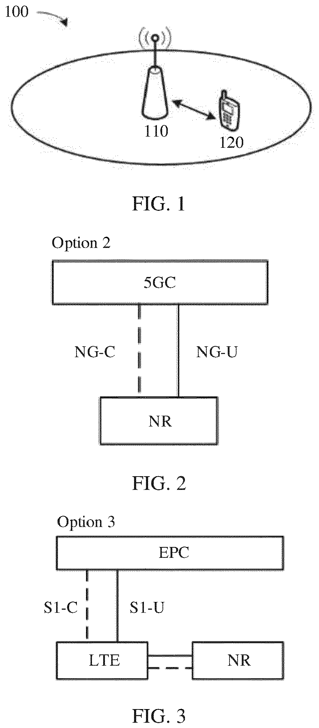

For ease of understanding embodiments of this application, a communication system applicable to embodiments of this application is first described in detail with reference to FIG. 1. FIG. 1 is a schematic diagram of a communication system 100 applicable to an embodiment of this application. As shown in FIG. 1, the communication system 100 may include at least one network device, for example, a network device 110 shown in FIG. 1. The communication system 100 may further include at least one terminal device, for example, a terminal device 120 shown in FIG. 1. The network device 110 may communicate with the terminal device 120 through a radio link. A plurality of antennas may be configured for each communication device such as the network device 110 or the terminal device 120. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that each communication device may include a plurality of parts (for example, a processor, a modulator, a multiplexer, a demodulator, a demultiplexer, or an antenna) related to signal sending and receiving. Therefore, the network device 110 may communicate with the terminal device 120 by using a multi-antenna technology.

A terminal device in embodiments of this application may communicate with one or more core networks over a radio access network (radio access network, RAN), and the terminal device may be referred to as an access terminal, user equipment (user equipment, UE), a subscriber unit, a subscriber station, a mobile station, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, personal digital assistant (personal digital assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (public land mobile network, PLMN), or the like

A network device in embodiments of this application may be a device configured to communicate with the terminal device. The network device may be a base transceiver station (base transceiver station, BTS) in a global system for mobile communications (global system of mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a future 5G network, a network device in a future evolved PLMN, or the like. This is not limited in embodiments of this application. For example, the network device may be a gNB or a transmission point (TRP or TP) in an NR system, one antenna panel or a group of antenna panels (including a plurality of antenna panels) of a base station in a 5G system, or a network node constituting the gNB or the transmission point, such as a baseband unit (BBU) or a distributed unit (distributed unit, DU).

In some deployments, a gNB may include a central unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer; and the DU implements functions of a radio link control (radio link control, RLC) layer, a media access control (media access control, MAC) layer, and a physical (physical, PHY) layer. Information at the RRC layer is eventually converted into information at the PHY layer, or is converted from information at the PHY layer. Therefore, in such an architecture, higher layer signaling such as RRC layer signaling may also be considered as being sent by the DU or sent by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

Alternatively, the network device may make a general reference to a generic term of all devices at a network end. For example, when a plurality of TRPs are used to transmit data to the terminal device, the plurality of TRPs may be collectively referred to as the network device.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

For ease of understanding, the following first describes related terms in embodiments of this application.

### 1. SSB

The SSB is a generic term of a synchronization signal and PBCH block in 5G, and mainly includes a PSS, an SSS, and a PBCH. The SSB may be sent by a network device through a broadcast channel. Before accessing a network, a terminal device needs to search for the PSS and the SSS to complete time synchronization, and receive the PBCH channel to complete obtaining of cell information, so as to prepare for the access.

Currently, the SSB is sent in a configured fixed periodicity. The fixed periodicity may be generally configured as 5 ms, 10 ms, 20 ms, 40 ms, 80 ms, 160 ms, or the like. A periodicity that is 40 ms or longer (including 40 ms) is generally referred to as a long periodicity, and a periodicity that is 20 ms or shorter (including 20 ms) is generally referred to as a short periodicity.

### 2. Networking mode

Currently, the networking mode includes a standalone (standalone, SA) networking mode and a non-standalone (non-standalone, NSA) networking mode.

SA means that a new 5G network is established, including a new base station, a backhaul link, and a core network. In addition to introducing brand new network elements and interfaces, the SA further uses new technologies such as network virtualization and softwaredefined networking on a large scale, and combines the new technologies with NR. Moreover, technical challenges faced by the SA in protocol development, network planning and deployment, and interworking and interoperation surpass those of a 4th generation (4th generation, 4G) system.

NSA means that a 5G network is deployed by using an infrastructure in the existing 4G system. A 5G carrier based on an NSA architecture carries only user data, and control signaling of the 5G carrier is still communicated over a 4G network.

The NSA needs to use a dual-connectivity architecture. In the dual-connectivity architecture, a terminal device in a connected mode may simultaneously use radio resources of at least two different base stations (including a primary base station and a secondary base station). In the dual-connectivity architecture, a base station responsible for a control plane is referred to as a control plane anchor. Because the user data needs to be split to two dual-connectivity paths for independent transmission, a location at which the data is split is referred to as a data split control point.

FIG. 2 shows a typical SA networking scenario. The networking scenario shown in FIG. 2 is referred to as an option 2. In an architecture of the option 2, NR (namely, a 5G base station) is connected to a 5G core (5G core, 5GC) network. An interface between NR and the 5GC is referred to as an NG interface. The NG interface includes an NG-control plane (NG-control, NG-C) interface and an NG-user plane (NG-user, NG-U) interface. The two interfaces are respectively configured to communicate control signaling and user data. The option 2 shown in FIG. 2 can introduce the 5G base station and the 5G core network in one step. This does not depend on an existing 4G network and has a shortest evolution path. In the option 2, the brand new 5G base station and 5G core network can support all new functions and new services introduced by the 5G network.

FIG. 3 to FIG. 10 show several typical NSA networking scenarios.

A networking scenario shown in FIG. 3 is referred to as an option 3. In the option 3, NR cannot be directly connected to a 4G core network, namely, an evolved packet core (evolved packet core, EPC) network. Therefore, NR may be connected to LTE (namely, a 4G base station), and is connected to the EPC by using LTE. An interface between LTE and the EPC is referred to as an S 1 interface. The S1 interface includes an S 1-control plane (S 1-control, S 1-C) interface and an S1-user plane (S1-user, S1-U) interface. The two interfaces are respectively configured to communicate control signaling and user data. A data split control point in the option 3 is on LTE. In other words, LTE is not only responsible for control and management, but also responsible for splitting data from the EPC to two paths. Data on one path is sent by LTE to a terminal device, and data on the other path is split to NR, and sent by NR to the terminal device.

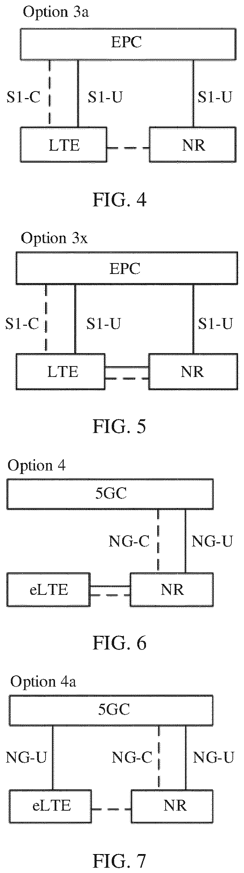

A networking scenario shown in FIG. 4 is referred to as an option 3a. The option 3a is similar to the option 3. A difference is that in the option 3a, a user plane of NR is directly connected to an EPC, and a control plane of NR continues to be anchored to LTE.

A networking scenario shown in FIG. 5 is referred to as an option 3x. The option 3x is similar to the option 3. A difference is that in the option 3x, user plane data is divided into two parts, the part that causes a bottleneck to LTE is migrated to NR, and the other part continues to be communicated by using LTE.

A networking scenario shown in FIG. 6 is referred to as an option 4. In the option 4, the EPC in the option 3 is replaced with a 5GC. Enhanced LTE (enhanced LTE, eLTE) shares the 5GC with NR. NR is connected to the 5GC. eLTE is connected to NR, and is connected to the 5GC by using NR. In the option 4, NR is a primary base station, and eLTE is a secondary base station. A data split control point in the option 4 is on NR. In other words, NR is not only responsible for control and management, but also responsible for splitting data from the 5GC to two paths. Data on one path is sent by NR to a terminal device, and data on the other path is split to eLTE, and sent by eLTE to the terminal device. It should be noted that because a core network is the 5GC, in this networking scenario, hardware of LTE needs to be reconstructed, to upgrade LTE to eLTE.

A networking scenario shown in FIG. 7 is referred to as an option 4a. The option 4a is similar to the option 4. A difference is that in the option 4a, a user plane of eLTE is directly connected to a 5GC, and a control plane of eLTE continues to be anchored to NR.

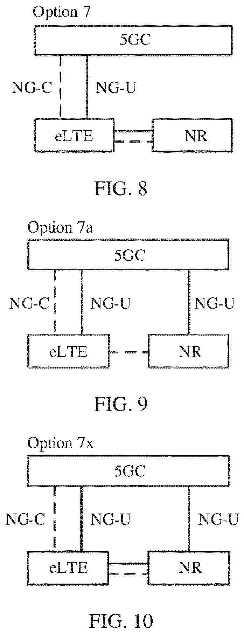

A networking scenario shown in FIG. 8 is referred to as an option 7. In the option 7, the EPC in the option 3 is replaced with a 5GC, and corresponding interfaces are also changed to an NG-C interface and an NG-U interface. A control plane anchor and a data split control point are similar to those in the option 3. Details are not described herein again.

A networking scenario shown in FIG. 9 is referred to as an option 7a. In the option 7a, the EPC in the option 3a is replaced with a 5GC, and corresponding interfaces are also changed to an NG-C interface and an NG-U interface. A control plane anchor and a data split control point are similar to those in the option 3a. Details are not described herein again.

A networking scenario shown in FIG. 10 is referred to as an option 7x. In the option 7x, the EPC in the option 3x is replaced with a 5GC, and corresponding interfaces are also changed to an NG-C interface and an NG-U interface. A control plane anchor and a data split control point are similar to those in the option 3x. Details are not described herein again.

As shown in the foregoing plurality of networking scenarios, an SA architecture is simpler, while the NSA architecture is slightly more complex. However, in NSA networking, 5G coverage can be expanded with the help of the current mature 4G network, and 5G base stations can use the existing 4G core network, eliminating a need for 5G core network construction.

It should be understood that embodiments of this application are applicable to the foregoing plurality of networking scenarios. Details are described subsequently.

In actual live network application, if a fixed long periodicity is configured for an SSB, problems such as difficulty in network searching, a call drop, and an access failure occur on a terminal device, and access, handover, and service stability of the terminal device are affected. Therefore, an SSB with a short periodicity is currently configured for a live network.

However, if the SSB with the short periodicity is fixedly configured, a proportion of time domain resources occupied by the SSB is large and waste is caused (for example, an SSB with a periodicity of 20 ms is configured, and a proportion of time domain resources occupied by the SSB is 7.69%), and symbol power saving cannot be performed in a slot of sending the SSB. This compresses energy saving benefits. In addition, with development of communication technologies, a problem that power consumption of the terminal device is excessively high becomes increasingly prominent. How to reduce the power consumption of the terminal device is of great significance for saving social resources, improving product competitiveness, and helping an operator reduce costs. In some scenarios (for example, a small quantity of users with load), there is no doubt that a manner of sending an SSB with a fixed short periodicity occupies a large quantity of time domain resources. Consequently, symbol power saving cannot be performed, and resource waste and power waste are caused.

In view of this, embodiments of this application provide a signal transmission method and a communication apparatus, so that SSBs with different periodicities can be flexibly sent based on an actual network parameter. This helps improve an access success rate, a handover success rate, and service stability of a terminal device, and reduce a proportion of time domain resources occupied by the SSB.

Before the method provided in embodiments of this application is described, the following descriptions are first provided.

First, in embodiments of this application, "pre-defining" may be implemented by prestoring corresponding code, a table, or another manner that may be used to indicate related information in a device (for example, including a terminal device and a network device). A specific implementation is not limited in this application.

Second, in embodiments shown in the following, terms and English acronyms and abbreviations, such as radio resource control (radio resource control, RRC), a synchronization signal and physical broadcast channel block (synchronization signal and PBCH block, SSB), are all examples provided for ease of description, and shall not constitute any limitation on this application. This application does not preclude a possibility of defining other terms that can implement the same or similar functions in existing or future protocols.

Third, "first", "second", and various numbers in embodiments shown in the following are merely used for differentiation for ease of description, and are not intended to limit the scope of embodiments of this application. For example, different network devices are differentiated.

Fourth, a "protocol" in embodiments of this application may be a standard protocol in the communication field, for example, may include an LTE protocol, an NR protocol, and a related protocol applied to a future communication system. This is not limited in this application.

Fifth, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. The expression "at least one of the following items (pieces)" or a similar expression thereof indicates any combination of these items, including a single item (piece) or any combination of a plurality of items (pieces). For example, at least one of a, b, and c may indicate: a, or b, or c, or a and b, or a and c, or b and c, or a and b and c, where a, b, and c may be singular or plural.

The following describes the method and the apparatus provided in this application with reference to the accompanying drawings. It should be understood that the technical solutions of this application may be applied to a wireless communication system, for example, the communication system 100 shown in FIG. 1. There may be a wireless communication connection relationship between two communication apparatuses in the wireless communication system. One of the two communication apparatuses may correspond to the terminal device 120 shown in FIG. 1, for example, may be the terminal device shown in FIG. 1, or may be a chip disposed in the terminal device. The other communication apparatus in the two communication apparatuses may correspond to the network device 110 shown in FIG. 1, for example, may be the network device shown in FIG. 1, or may be a chip disposed in the network device.

The communication system 100 shown in FIG. 1 may use any networking mode shown in FIG. 2 to FIG. 10. The network device 110 may be a network device in 4G, or may be a network device in 5G. However. This is not limited in embodiments of this application.

Without loss of generality, the following describes in detail the signal transmission method provided in embodiments of this application by using an interaction process between a terminal device and a network device as an example.

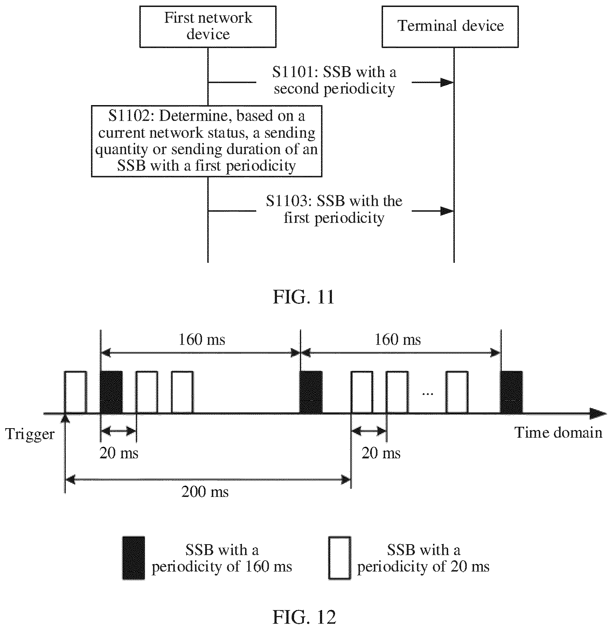

FIG. 11 is a schematic flowchart of a signal transmission method 1100 according to an embodiment of this application. The method 1100 includes the following steps.

S1101: A first network device fixedly sends an SSB with a second periodicity, where the second periodicity is greater than or equal to 40 ms. Correspondingly, a terminal device receives the SSB with the second periodicity.

S1102: The first network device determines, based on a current network parameter, a sending quantity or sending duration of a synchronization signal and physical broadcast channel block SSB with a first periodicity.

S1103: The first network device sends, on a basis of fixedly sending the SSB with the second periodicity, the SSB with the first periodicity based on the sending quantity or the sending duration, where the first periodicity is less than or equal to 20 ms. Correspondingly, the terminal device receives the SSB with the first periodicity.

The terminal device herein is merely a general reference, and may include one or more terminal devices, and the terminal device in S1101 may be the same as or different from the terminal device in S1103. The sending in this embodiment of this application generally refers to broadcasting. In other words, the first network device sends an SSB through a broadcast channel.

It should be understood that the first network device may be understood as the network device 110 in FIG. 1. In an SA networking mode, the first network device is a network device in SA, and in an NSA networking mode, the first network device is a primary network device (for example, a primary base station) in NSA.

It should be further understood that the first periodicity may also be referred to as a short periodicity, and the second periodicity may also be referred to as a long periodicity.

The second periodicity in this embodiment of this application is predefined, for example, agreed upon in a protocol, where the first network device fixedly sends an SSB in the second periodicity. The second periodicity may be, for example, 160 ms. The first periodicity in this embodiment of this application may be predefined, for example, agreed upon in a protocol, or may be determined by the first network device based on the current network parameter. For example, the first periodicity may be 20 ms. This is not limited in this embodiment of this application.

The sending quantity and the sending duration may be obtained through mutual deduction. When the first periodicity is determined, if the sending quantity of the SSB with the first periodicity is determined, the SSB may be sent based on the first periodicity and the sending quantity. Similarly, when the first periodicity is determined, if the sending duration of the SSB with the first periodicity is determined, the SSB may be sent based on the first periodicity and the sending duration. For example, that the first periodicity is 20 ms and the sending duration is 500 ms is equivalent to that the first periodicity is 20 ms and the sending quantity of the SSB is 25.

The sending quantity or the sending duration may be predefined, for example, agreed upon in a protocol, or may be determined by the first network device based on the current network parameter. This is not limited in this embodiment of this application.

According to the signal transmission method in this embodiment of this application, on a basis of currently sending an SSB in a fixed long periodicity (namely, the second periodicity), a cluster of SSBs with a short periodicity (namely, the first periodicity) are additionally and dynamically sent. In this way, the SSB with the long periodicity is fixedly configured, so that a call drop problem caused by affecting terminal measurement does not exist. This helps improve service stability of the terminal device. In addition, an SSB with the short periodicity is dynamically and additionally sent based on an actual network parameter, so that the SSB in this application is sent more flexibly. Compared with a solution in which the SSB with the long periodicity is sent fixedly for a long term, this helps improve an access success rate and a handover success rate of the terminal device. Compared with a solution in which the SSB with the short periodicity is sent fixedly for a long term, this reduces a proportion of time domain resources occupied by the SSB, and can obtain energy saving benefits in combination with symbol power saving, so that resource utilization is improved.

In an optional implementation, the method further includes: The first network device determines a sending periodicity of an SSB cluster, where the SSB cluster includes a plurality of consecutive SSBs with the first periodicity; and in S1103, that the first network device sends, on a basis of sending the SSB with the second periodicity, the SSB with the first periodicity based on the sending quantity or the sending duration includes: The first network device sends, on the basis of sending the SSB with the second periodicity, the SSB with the first periodicity based on the sending periodicity of the SSB cluster and the sending quantity or the sending duration.

It should be understood that a plurality of consecutively sent SSBs with the first periodicity may form one SSB cluster. In this embodiment of this application, the first network device may periodically send a plurality of SSB clusters based on an actual network status. Therefore, the first network device needs to determine the sending periodicity of the SSB cluster, where the sending periodicity of the SSB cluster may also be referred to as a "cluster sending periodicity" or another name. The sending periodicity of the SSB cluster may be predefined, for example, agreed upon in a protocol, or may be determined by the first network device based on the actual network status. This is not limited herein.

For example, FIG. 12 is a schematic diagram of signal transmission based on a method according to an embodiment of this application. In FIG. 12, a first periodicity is 20 ms, a sending quantity of SSBs is 4, and a second periodicity is 160 ms. Four SSBs with a periodicity of 20 ms form one SSB cluster, and a sending periodicity of the SSB cluster may be 200 ms. In this case, the first network device sends, on a basis of fixedly sending an SSB with a periodicity of 160 ms, four SSBs with the periodicity of 20 ms every 200 ms. Sending of the SSBs (namely, the SSB cluster) with the periodicity of 20 ms in FIG. 12 is triggered by the first network device.

It should be understood that an SSB with the first periodicity and an SSB with the second periodicity may be the same, for example, the 2^{nd} SSB in time domain in FIG. 12. In this case, the SSB may be referred to as the SSB with the first periodicity, or may be referred to as the SSB with the second periodicity.

In an optional embodiment, in S1102, that the first network device determines, based on a current network parameter, a sending quantity or sending duration of a synchronization signal and physical broadcast channel block SSB with a first periodicity includes: The first network device obtains at least one of load of a current network, a quantity of online activated users, or a quantity of cell edge users, where the quantity of cell edge users indicates a quantity of users corresponding to a device whose signal strength is greater than or equal to a preset threshold value in the current network; and when at least one of the load, the quantity of online activated users, or the quantity of cell edge users is greater than or equal to a preset threshold, the first network device determines the sending quantity or the sending duration of the SSB with the first periodicity.

For example, the load of the current network may correspond to a first preset threshold, the quantity of online activated users may correspond to a second preset threshold, and the quantity of cell edge users may correspond to a third preset threshold. The three preset thresholds are predefined, for example, agreed upon in a protocol. In addition, the three preset thresholds may be the same or may be different. This is not limited in this embodiment of this application.

In this embodiment of this application, it may be understood that the current network parameter includes at least one of the load of the current network, the quantity of online activated users, or the quantity of cell edge users, and a condition for sending the SSB with the first periodicity includes at least one of the following:
1. The load of the current network is greater than or equal to the first preset threshold.
2. The quantity of online activated users is greater than or equal to the second preset threshold.
3. The quantity of cell edge users is greater than or equal to the third preset threshold.

When at least one of the foregoing conditions is met, the first network device may determine that one or more additional clusters of SSBs with the short periodicity need to be added, to ensure effective access and handover of a terminal device.

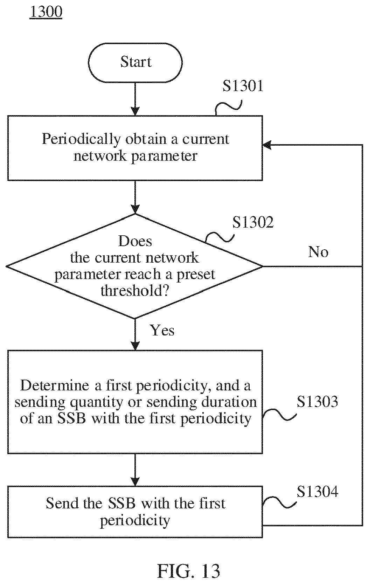

FIG. 13 is a schematic flowchart of another signal transmission method 1300 according to an embodiment of this application. The method 1300 is performed by the foregoing first network device, and may include the following steps.

S1301: The first network device periodically obtains a current network parameter.

S 1302: The first network device determines whether the current network parameter reaches (namely, is greater than or equal to) a preset threshold.

If the current network parameter reaches the preset threshold, the following two steps are performed.

S 1303: Determine a first periodicity, and a sending quantity or sending duration of SSBs with the first periodicity.

S1304: Send the SSB with the first periodicity.

If the current network parameter does not reach (namely, is less than) the preset threshold, S 1301 continues to be performed.

In a possible implementation, preset thresholds of a plurality of gradients may be configured for the current network parameter based on an actual service status. The first network device may determine the first periodicity, the quantity or the sending duration of the SSBs with the first periodicity based on a threshold reached by the current network parameter. Optionally, the first network device may also determine a sending periodicity of an SSB cluster based on the threshold reached by the current network parameter.

For example, it is assumed that a quantity of the plurality of gradients is 3. An example in which the current network parameter is load of a current network is used, and a condition for sending the SSB with the first periodicity is that the load of the current network is greater than or equal to a first preset threshold. In this embodiment, the load of the current network corresponds to three first preset thresholds, and correspondences between the three first preset thresholds and sending parameters (including a cluster sending periodicity, and a sending periodicity (namely, the first periodicity) and a sending quantity of an SSB in the cluster) of the SSB cluster are shown in Table 1.

**Table 1**

| First preset threshold | Sending parameter of the SSB cluster |
|---|---|
| 50 | The first periodicity is 20 ms, the sending quantity is 10, and the sending periodicity of the SSB cluster is 200 ms. |
| 100 | The first periodicity is 10 ms, the sending quantity is 15, and the sending periodicity of the SSB cluster is 100 ms. |
| 200 | The first periodicity is 5 ms, the sending quantity is 20, and the sending periodicity of the SSB cluster is 80 ms. |

When the load of the current network is greater than or equal to 50 and less than 100, the first network device may choose to send the SSB cluster whose first periodicity is 20 ms, sending quantity is 10, and sending periodicity of the SSB cluster is 200 ms. When the load of the current network is greater than or equal to 100 and less than 200, the first network device may choose to send the SSB cluster whose first periodicity is 10 ms, sending quantity is 15, and sending periodicity of the SSB cluster is 100 ms. When the load of the current network is greater than or equal to 200, the first network device may choose to send the SSB cluster whose first periodicity is 5 ms, sending quantity is 20, and sending periodicity of the SSB cluster is 80 ms.

It should be understood that Table 1 may be predefined, for example, agreed upon in a protocol. It should be further understood that the correspondences between the preset thresholds and the sending parameters of the SSB cluster and specific values in Table 1 are merely examples provided for ease of understanding. In an actual network running process, another value or another correspondence may be configured. This is not limited in this embodiment of this application.

The foregoing examples describe only one network parameter. When the current network parameter includes a plurality of network parameters, the plurality of network parameters may correspond to respective preset thresholds, and the respective preset thresholds include a plurality of gradients. For example, the current network parameter includes the load of the current network, a quantity of online activated users, and a quantity of cell edge users. When the load of the current network is greater than or equal to the first preset threshold, the quantity of online activated users is greater than or equal to a second preset threshold, and the quantity of cell edge users is greater than or equal to a third preset threshold, the first network device sends the SSB with the first periodicity. The first preset threshold includes a gradient 11, a gradient 12, and a gradient 13. The second preset threshold includes a gradient 21, a gradient 22, and a gradient 23. The third preset threshold includes a gradient 31, a gradient 32, and a gradient 33. The gradient 11, the gradient 21, and the gradient 31 correspond to a sending parameter of an SSB cluster. The gradient 12, the gradient 22, and the gradient 32 correspond to a sending parameter of another SSB cluster. The gradient 13, the gradient 23, and the gradient 33 correspond to a sending parameter of still another SSB cluster. The sending parameters may be preconfigured for the first network device in a form similar to that in Table 1. In this way, when each network parameter reaches a gradient of a respective preset threshold, the first network device may determine a sending parameter that is of an SSB cluster and that corresponds to the gradient. A case of a plurality of network parameters is similar to a case of one network parameter. Details are not described herein again.

In an optional embodiment, after S 1103, the method further includes: The first network device stops, based on the current network parameter, sending the SSB with the first periodicity.

When the first network device sends the SSB cluster based on the sending periodicity of the SSB cluster, the SSBs with the first periodicity are consecutively sent. After sending the SSB with the first periodicity, the first network device may continue to periodically obtain the current network parameter, and perform determining based on the current network parameter. When the current network parameter is less than the preset threshold, the first network device stops sending the SSB with the first periodicity, to reduce a proportion of time domain symbols occupied by the SSB and save resources.

For example, the first network device may periodically obtain at least one of the load of the current network, the quantity of online activated users, or the quantity of cell edge users, where the quantity of cell edge users indicates a quantity of users corresponding to a device whose signal strength is greater than or equal to a preset threshold value in the current network; and when at least one of the load, the quantity of online activated users, or the quantity of cell edge users is less than the preset threshold, the first network device stops sending the SSB with the first periodicity.

The preset threshold herein is the same as the preset threshold in the condition for sending the SSB with the first periodicity. In other words, in this embodiment of this application, the SSB with the first periodicity may be sent when the condition for sending the SSB with the first periodicity is met, and the sending of the SSB with the first periodicity is stopped when the condition for sending the SSB of the first periodicity is not met, to reduce a proportion of time domain symbols occupied by the SSB and save resources.

In an optional embodiment, the method further includes: The first network device receives indication information from a second network device, where the indication information indicates that a terminal device requests access, the first network device is a primary network device, and the second network device is a secondary network device; and the first network device sends, on a basis of sending an SSB with a second periodicity, an SSB with a third periodicity based on the indication information, where the third periodicity is less than or equal to 20 ms.

This embodiment of this application is applied to the foregoing NSA networking mode, and the second network device is a secondary network device (for example, a secondary base station) in NSA. In NSA networking, the terminal device may access the first network device via the second network device. That the terminal device successfully accesses the second network device may be understood as that the terminal device completes establishment of a radio resource control (radio resource control, RRC) connection on a second network device side.

After the terminal device successfully accesses the second network device, the second network device may notify the first network device of the access of the terminal device. The first network device may dynamically and quickly add one cluster of SSBs with a short periodicity and send the cluster of SSBs, namely, the SSB with the third periodicity in this embodiment of this application. This is for resolving a problem that when the terminal device performs access in the NSA networking, the terminal device fails to perform access due to a synchronization failure between the terminal device and the first network device, and ensuring normal access and service experience of the terminal device when a long periodicity is configured in the NSA networking.

The third periodicity is predefined, for example, agreed upon in a protocol. For example, the third periodicity may be 20 ms, or may be 10 ms. The third periodicity may be the same as or different from the first periodicity. This is not limited in this embodiment of this application.

In an optional embodiment, after that the first network device sends, on a basis of sending an SSB with the second periodicity, an SSB with a third periodicity based on the indication information, the method further includes: After the terminal device successfully accesses the first network device, the first network device stops sending the SSB with the third periodicity.

The successful access of the terminal device may be understood as that the terminal device completes RRC connection reconfiguration on a first network device side. In this embodiment of this application, after the terminal device successfully accesses the first network device, sending of the SSB with the third periodicity is stopped. This ensures the successful access of the terminal device, reduces a proportion of time domain symbols occupied by the SSB, and saves resources.

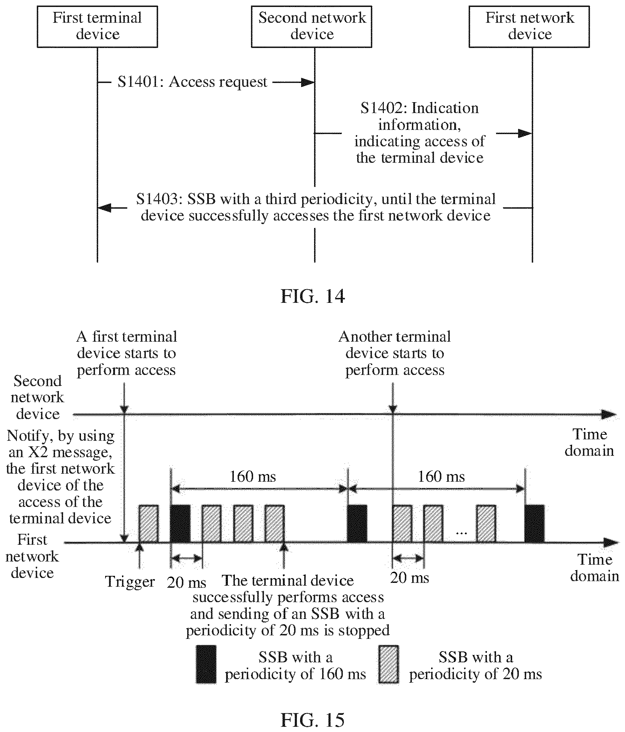

FIG. 14 is a schematic flowchart of still another signal transmission method 1400 according to an embodiment of this application. The method 1400 is applied to an NSA networking scenario, and may include the following steps.

S1401: A first terminal device sends an access request to a second network device, and correspondingly, the second network device receives the access request. The first terminal device starts to access the second network device.

S 1402: After the first terminal device successfully accesses the second network device (in other words, an RRC connection is successfully established), the second network device sends indication information to the first network device, where the indication information indicates the access of the first terminal device, and correspondingly, the first network device receives the indication information.

Optionally, the indication information may be sent by using an X2 interface message, for example, may be sent by using a self-defined message, or may be sent by being reused in an existing secondary base station addition request (secondary gNB addition request) message.

S1403: The first network device sends, on a basis of fixedly sending an SSB with a second periodicity, an SSB with a third periodicity based on the indication information until the first terminal device successfully accesses the first network device.

It should be understood that the first terminal device is a specific terminal device that currently requests access, to be differentiated from the terminal device in the foregoing method 1100.

For example, FIG. 15 is another schematic diagram of signal transmission based on a method according to an embodiment of this application. In FIG. 15, a second periodicity is 160 ms, a third periodicity is 20 ms, and SSBs with the third periodicity are consecutively sent until a terminal device successfully accesses a first network device. As shown in FIG. 15, a first terminal device accesses a second network device, the second network device notifies, by using an X2 message, the first network device of the access of the terminal device. The first network device triggers, based on the X2 message, sending of an SSB with a periodicity of 20 ms. Specifically, the first network device sends one SSB every 20 ms on a basis of fixedly sending an SSB with a periodicity of 160 ms. After five SSBs are sent, the terminal device successfully accesses the first network device, and the first network device stops sending the SSB with the periodicity of 20 ms. After a time period, another terminal device performs access, and the first network device may retrigger sending of the SSB with the periodicity of 20 ms. A specific procedure is similar to the foregoing. Details are not described herein again.

It should be understood that an SSB with the third periodicity and an SSB with the second periodicity may be the same, for example, the 2^{nd} SSB in time domain in FIG. 15. In this case, the SSB may be referred to as the SSB with the third periodicity, or may be referred to as the SSB with the second periodicity.

After the first terminal device successfully accesses the first network device, the first network device may determine, based on a current network parameter, whether to send an SSB with a first periodicity, and determine a sending quantity or sending duration of the SSB with the first periodicity, that is, perform the method 1100. Details are not described herein again.

It should be understood that, sequence numbers of the foregoing processes do not mean execution sequences. The execution sequences of the processes should be determined based on functions and internal logic of the processes, and should not constitute any limitation on the implementation processes of embodiments of this application.

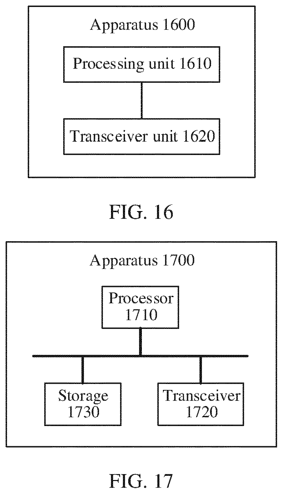

With reference to FIG. 1 to FIG. 15, the foregoing describes in detail the signal transmission methods according to embodiments of this application. With reference to FIG. 16 and FIG. 17, the following describes in detail communication apparatuses according to embodiments of this application.

FIG. 16 shows a communication apparatus 1600 according to an embodiment of this application. In a design, the apparatus 1600 may be a network device, or may be a chip in the network device. The apparatus 1600 includes a processing unit 1610 and a transceiver unit 1620.

The processing unit 1610 is configured to determine, based on a current network parameter, a sending quantity or sending duration of a synchronization signal and physical broadcast channel block SSB with a first periodicity. The transceiver unit 1620 is configured to send, on a basis of sending an SSB with a second periodicity, the SSB with the first periodicity based on the sending quantity or the sending duration, where the first periodicity is less than or equal to 20 ms, and the second periodicity is greater than or equal to 160 ms.

Optionally, the processing unit 1610 is specifically configured to: obtain at least one of load of a current network, a quantity of online activated users, or a quantity of cell edge users, where the quantity of cell edge users indicates a quantity of users corresponding to a device whose signal strength is greater than or equal to a preset threshold value in the current network; and when at least one of the load, the quantity of online activated users, or the quantity of cell edge users is greater than or equal to a preset threshold, determine the sending quantity or the sending duration of the SSB with the first periodicity.

Optionally, the processing unit 1610 is further configured to determine a sending periodicity of an SSB cluster, where the SSB cluster includes a plurality of consecutive SSBs with the first periodicity. The transceiver unit 1620 is specifically configured to send, on the basis of sending the SSB with the second periodicity, the SSB with the first periodicity based on the sending periodicity of the SSB cluster and the sending quantity or the sending duration.

Optionally, the processing unit 1610 is further configured to control, based on the current network parameter, the transceiver unit 1620 to stop sending the SSB with the first periodicity.

Optionally, the processing unit 1610 is specifically configured to: periodically obtain at least one of the load of the current network, the quantity of online activated users, or the quantity of cell edge users, where the quantity of cell edge users indicates the quantity of users corresponding to the device whose signal strength is greater than or equal to the preset threshold value in the current network; and when at least one of the load, the quantity of online activated users, or the quantity of cell edge users is less than the preset threshold, control the transceiver unit 1620 to stop sending the SSB with the first periodicity.

Optionally, the transceiver unit 1620 is further configured to: receive indication information from a second network device, where the indication information indicates that a terminal device requests access, the apparatus is a primary network device, and the second network device is a secondary network device; and send, on the basis of sending the SSB with the second periodicity, an SSB with a third periodicity based on the indication information, where the third periodicity is less than or equal to 20 ms.

Optionally, the processing unit 1610 is further configured to: after the terminal device successfully accesses the apparatus, control the transceiver unit 1620 to stop sending the SSB with the third periodicity.

It should be understood that the apparatus 1600 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and a storage, a merged logic circuit, and/or another appropriate component that supports the described function. In an optional example, a person skilled in the art may understand that the apparatus 1600 may specifically be the first network device in the foregoing embodiments, and the apparatus 1600 may be configured to perform procedures and/or steps corresponding to the first network device in the foregoing method embodiments. To avoid repetition, details are not described herein again.

The apparatus 1600 in the foregoing solutions has a function of implementing corresponding steps performed by the first network device in the foregoing methods. The function may be implemented by hardware, or may be implemented by hardware executing corresponding software. The hardware or the software includes one or more modules corresponding to the foregoing function. For example, the transceiver unit 1610 may include a sending unit and a receiving unit. The sending unit may be configured to implement steps and/or procedures that are corresponding to the transceiver unit and that are for performing a sending action, and the receiving unit may be configured to implement steps and/or procedures that are corresponding to the transceiver unit and that are for performing a receiving action. The sending unit may be replaced with a transmitter, and the receiving unit may be replaced with a receiver, to respectively perform receiving and sending operations and related processing operations in the method embodiments.

In this embodiment of this application, the apparatus 1600 in FIG. 16 may alternatively be a chip or a chip system, for example, a system on chip (system on chip, SoC). Correspondingly, the transceiver unit 1610 may be a transceiver circuit of the chip. This is not limited herein.

FIG. 17 shows another communication apparatus 1700 according to an embodiment of this application. The apparatus 1700 includes a processor 1710, a transceiver 1720, and a storage 1730. The processor 1710, the transceiver 1720, and the storage 1730 communicate with each other by using an internal connection path. The storage 1730 is configured to store instructions. The processor 1710 is configured to execute the instructions stored in the storage 1730, to control the transceiver 1720 to send a signal and/or receive a signal.

The processor 1710 is configured to determine, based on a current network parameter, a sending quantity or sending duration of a synchronization signal and physical broadcast channel block SSB with a first periodicity. The transceiver 1720 is configured to send, on a basis of sending an SSB with a second periodicity, the SSB with the first periodicity based on the sending quantity or the sending duration, where the first periodicity is less than or equal to 20 ms, and the second periodicity is greater than or equal to 160 ms.

It should be understood that the apparatus 1700 may be specifically the first network device in the foregoing embodiments, and may be configured to perform steps and/or procedures corresponding to the first network device in the foregoing method embodiments. Optionally, the storage 1730 may include a read-only memory and a random access memory, and provide instructions and data for the processor. A part of the storage may further include a non-volatile random access memory. For example, the storage may further store information about a device type. The processor 1710 may be configured to execute the instructions stored in the storage, and when the processor 1710 executes the instructions stored in the storage, the processor 1710 is configured to perform steps and/or procedures corresponding to the first network device in the method embodiments. The transceiver 1720 may include a transmitter and a receiver. The transmitter may be configured to implement steps and/or procedures that are corresponding to the transceiver and that are for performing a sending action, and the receiver may be configured to implement steps and/or procedures that are corresponding to the transceiver and that are for performing a receiving action.

It should be understood that in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may be any conventional processor or the like.

In an implementation process, steps in the foregoing methods can be completed by using a hardware integrated logical circuit in the processor, or by using instructions in a form of software. The steps of the methods disclosed with reference to embodiments of this application may be directly embodied as being performed by a hardware processor, or may be performed by a combination of hardware and software units in the processor. A software unit may be located in a mature storage medium in the art, such as a random access memory, a flash memory, a read-only memory, a programmable read-only memory, an electrically erasable programmable memory, a register, or the like. The storage medium is located in the storage, and the processor reads the instructions in the storage and completes the steps in the foregoing methods in combination with hardware of the processor. To avoid repetition, details are not described herein again.

A person of ordinary skill in the art may be aware that, method steps and units described with reference to embodiments disclosed in this specification may be implemented by electronic hardware, computer software, or a combination thereof. To clearly describe interchangeability between the hardware and the software, the foregoing has generally described steps and compositions of embodiments according to functions. Whether the functions are performed by the hardware or the software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing system, apparatuses, and units, refer to corresponding processes in the foregoing method embodiments, and details are not described herein again.

In the several embodiments provided in this application, it should be understood that the disclosed system, apparatuses, and methods may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

Units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, or a part contributing to a conventional technology, or all or some of the technical solutions may be embodied in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
determining, by a first network device based on a current network parameter, a sending quantity or sending duration of a synchronization signal and physical broadcast channel block SSB with a first periodicity; and
sending, by the first network device, on a basis of sending an SSB with a second periodicity, the SSB with the first periodicity based on the sending quantity or the sending duration, wherein the first periodicity is less than or equal to 20 ms, and the second periodicity is greater than or equal to 40 ms.

2. The method according to claim 1, wherein the determining, by a first network device based on a current network parameter, a sending quantity or sending duration of a synchronization signal and physical broadcast channel block SSB with a first periodicity comprises:
obtaining, by the first network device, at least one of load of a current network, a quantity of online activated users, or a quantity of cell edge users, wherein the quantity of cell edge users indicates a quantity of users corresponding to a device whose signal strength is greater than or equal to a preset threshold value in the current network; and
when at least one of the load, the quantity of online activated users, or the quantity of cell edge users is greater than or equal to a preset threshold, determining, by the first network device, the sending quantity or the sending duration of the SSB with the first periodicity.

3. The method according to claim 1 or 2, wherein the method further comprises:
determining, by the first network device, a sending periodicity of an SSB cluster, wherein the SSB cluster comprises a plurality of consecutive SSBs with the first periodicity; and
the sending, by the first network device, on a basis of sending an SSB with a second periodicity, the SSB with the first periodicity based on the sending quantity or the sending duration comprises:
sending, by the first network device on the basis of sending the SSB with the second periodicity, the SSB with the first periodicity based on the sending periodicity of the SSB cluster and the sending quantity or the sending duration.

4. The method according to any one of claims 1 to 3, wherein after the sending, by the first network device on a basis of sending an SSB with a second periodicity, the SSB with the first periodicity based on the sending quantity or the sending duration, the method further comprises:
stopping, by the first network device based on the current network parameter, sending the SSB with the first periodicity.

5. The method according to claim 4, wherein the stopping, by the first network device based on the current network parameter, sending the SSB with the first periodicity comprises:
periodically obtaining, by the first network device, at least one of the load of the current network, the quantity of online activated users, or the quantity of cell edge users, wherein the quantity of cell edge users indicates the quantity of users corresponding to the device whose signal strength is greater than or equal to the preset threshold value in the current network; and
when at least one of the load, the quantity of online activated users, or the quantity of cell edge users is less than the preset threshold, stopping, by the first network device, sending the SSB with the first periodicity.

6. The method according to any one of claims 1 to 5, wherein the method further comprises:
receiving, by the first network device, indication information from a second network device, wherein the indication information indicates that a terminal device requests access, the first network device is a primary network device, and the second network device is a secondary network device; and
sending, by the first network device on the basis of sending the SSB with the second periodicity, an SSB with a third periodicity based on the indication information, wherein the third periodicity is less than or equal to 20 ms.

7. The method according to claim 6, wherein after the sending, by the first network device on the basis of sending the SSB with the second periodicity, an SSB with a third periodicity based on the indication information, the method further comprises:
after the terminal device successfully accesses the first network device, stopping, by the first network device, sending the SSB with the third periodicity.

8. A communication apparatus, comprising:
a processing unit, configured to determine, based on a current network parameter, a sending quantity or sending duration of a synchronization signal and physical broadcast channel block SSB with a first periodicity; and
a transceiver unit, configured to send, on a basis of sending an SSB with a second periodicity, the SSB with the first periodicity based on the sending quantity or the sending duration, wherein the first periodicity is less than or equal to 20 ms, and the second periodicity is greater than or equal to 40 ms.

9. The apparatus according to claim 8, wherein the processing unit is specifically configured to:
obtain at least one of load of a current network, a quantity of online activated users, or a quantity of cell edge users, wherein the quantity of cell edge users indicates a quantity of users corresponding to a device whose signal strength is greater than or equal to a preset threshold value in the current network; and
when at least one of the load, the quantity of online activated users, or the quantity of cell edge users is greater than or equal to a preset threshold, determine the sending quantity or the sending duration of the SSB with the first periodicity.

10. The apparatus according to claim 8 or 9, wherein the processing unit is further configured to:
determine a sending periodicity of an SSB cluster, wherein the SSB cluster comprises a plurality of consecutive SSBs with the first periodicity; and
the transceiver unit is specifically configured to:
send, on the basis of sending the SSB with the second periodicity, the SSB with the first periodicity based on the sending periodicity of the SSB cluster and the sending quantity or the sending duration.

11. The apparatus according to any one of claims 8 to 10, wherein the processing unit is further configured to:
control, based on the current network parameter, the transceiver unit to stop sending the SSB with the first periodicity.

12. The apparatus according to claim 11, wherein the processing unit is specifically configured to:
periodically obtain at least one of the load of the current network, the quantity of online activated users, or the quantity of cell edge users, wherein the quantity of cell edge users indicates the quantity of users corresponding to the device whose signal strength is greater than or equal to the preset threshold value in the current network; and
when at least one of the load, the quantity of online activated users, or the quantity of cell edge users is less than the preset threshold, control the transceiver unit to stop sending the SSB with the first periodicity.

13. The apparatus according to any one of claims 8 to 12, wherein the transceiver unit is further configured to:
receive indication information from a second network device, wherein the indication information indicates that a terminal device requests access, the apparatus is a primary network device, and the second network device is a secondary network device; and
send, on the basis of sending the SSB with the second periodicity, an SSB with a third periodicity based on the indication information, wherein the third periodicity is less than or equal to 20 ms.

14. The apparatus according to claim 13, wherein the processing unit is further configured to:
after the terminal device successfully accesses the apparatus, control the transceiver unit to stop sending the SSB with the third periodicity.

15. A communication apparatus, comprising a processor, wherein the processor is coupled to a storage, the storage is configured to store a computer program, and when the processor invokes the computer program, the apparatus is enabled to perform the method according to any one of claims 1 to 7.

16. A chip, wherein the chip comprises a processor and an interface, and the chip is configured to invoke and run a computer program stored in a storage, to perform the method according to any one of claims 1 to 7.

17. A computer-readable storage medium, configured to store a computer program, wherein the computer program comprises instructions for implementing the method according to any one of claims 1 to 7.

18. A computer program product, wherein the computer program product comprises instructions, and when the instructions are run on a computer, the computer is enabled to perform the method according to any one of claims 1 to 7.
